Europäisches Patentamt

European Patent Office

Office européen des brevets

(11) Veröffentlichungsnummer: **0 286 820 B1**

(12) **EUROPÄISCHE PATENTSCHRIFT**

(45) Veröffentlichungstag der Patentschrift: **21.11.91**

(51) Int. Cl.⁵: **G01B 7/02**

(21) Anmeldenummer: **88103348.4**

(22) Anmeldetag: **04.03.88**

(54) **Messkluppe.**

(30) Priorität: **06.03.87 DE 3707190**

(43) Veröffentlichungstag der Anmeldung:
**19.10.88 Patentblatt 88/42**

(45) Bekanntmachung des Hinweises auf die
Patenterteilung:
**21.11.91 Patentblatt 91/47**

(84) Benannte Vertragsstaaten:
**AT CH DE FR LI SE**

(56) Entgegenhaltungen:
EP-A- 0 115 572        DE-A- 2 541 890
DE-A- 3 326 476        DE-B- 1 925 100
FR-A- 2 020 650        US-A- 4 226 024

PATENT ABSTRACTS OF JAPAN, Band 1, Nr.
159, 6. Dezember 1977, Seite 8569 E77; & JP -
A - 52 101 065

PATENT ABSTRACTS OF JAPAN, Band 8, Nr.
259 (P-317)[1696], 28. November 1984; & JP -
A - 59 129 918

PATENT ABSTRACTS OF JAPAN, Band 5, Nr.
169 (P-86)[841], 28. Oktober 1981; & JP - A -
56 97825

(73) Patentinhaber: **PAV Präzisions-Apparatebau
Aktiengesellschaft
Schaaner Strasse 40
FL-9490 Vaduz(LI)**

(72) Erfinder: **Lazecki, Rene
Heldaustrasse 160
CH-9470 Buchs/SG(CH)**

(74) Vertreter: **Witte, Alexander, Dr.-Ing.
Witte, Weller & Hilgenfeldt Patent- und
Rechtsanwälte Augustenstrasse 7
W-7000 Stuttgart 1(DE)**

**Beschreibung**

Die Erfindung betrifft eine Meßkluppe mit einem Stab und einem auf dem Stab mittels formschlüssiger Führung längsverschiebbaren Läufer, wobei der Stab und der Läufer mit je einem rechtwinkelig zu einer Längsachse des Stabes abstehenden Meßschnabel in zueinander paralleler Anordnung versehen sind, und zwischen dem Stab und dem Läufer magnetische Längsmarkierungen in Wechselwirkung mit mindestens einem Längensensor stehen.

Eine Meßkluppe dieser Art ist aus der dem Dokument US-A-4 226 024 bekannt.

Bei der bekannten Meßkluppe sind in den Stab magnetisch aktive Längsmarkierungen eingelassen, während der Stab im übrigen aus nicht-magnetischem Material besteht. Auf dem Läufer ist ein Längensensor angeordnet, dessen magnetfeldempfindliches Element als Feldplatte ausgebildet ist. Bei der bekannten Meßkluppe sind zwei Feldplatten im axialen Abstand voneinander angeordnet, wobei dieser Abstand ein ungeradzahliges Vielfaches des halben Rastermaßes der magnetischen Längsmarkierungen ist.

Auf diese Weise kann durch Vergleich der von den beiden Feldplatten gelieferten Signale die Verschieberichtung des Läufers auf dem Stab bestimmt werden, und durch Zählen der in einer der beiden Feldplatten erzeugten Signale kann die Anzahl der Markierungen bestimmt werden, die an dem Läufer vorbeigelaufen sind.

Die bekannte Meßkluppe hat jedoch den Nachteil, daß Feldplatten relativ empfindlich gegenüber Umwelteinflüssen sind, insbesondere empfindlich gegenüber Temperaturschwankungen.

Der Erfindung liegt die Aufgabe zugrunde, eine einfach zu handhabende, robuste und kostengünstige Meßkluppe zu schaffen.

Diese Aufgabe wird erfindungsgemäß dadurch gelöst, daß bei einer Meßkluppe der eingangs genannten Art der Längensensor als Tonband-Meßkopf mit einem Luftspalt ausgebildet ist, aus dem ein Streufeld austritt, und daß der Magnetkopf so positioniert ist, daß beim Verschieben des Läufers auf dem Stab die magnetischen Längsmarkierungen durch das Streufeld laufen.

Die der Erfindung zugrundeliegende Aufgabe wird auf diese Weise vollkommen gelöst, weil ein Tonband-Magnetkopf ein einfach zu handhabendes und robustes Element ist, das als Großserienelement darüberhinaus auch zu wirtschaftlich günstigen Bedingungen zur Verfügung steht. Darüberhinaus ist auch der Stromverbrauch derartiger Magnetköpfe sehr gering, weil diese Magnetköpfe oftmals Teil von transportablen Tonband- oder Tonbandkassettengeräten sind und daher auf geringen Stromverbrauch hin ausgelegt werden. Dies wirkt sich günstig bei der Verwendung in der erfindungsgemäßen Meßkluppe aus, weil auch diese Meßkluppe ein portables Gerät ist, das mit Batterien, Akkumulatorzellen oder Solarzellen versorgt wird, so daß auf geringen Stromverbrauch der elektrischen und elektronischen Elemente größter Wert gelegt werden muß. Schließlich sind Tonband-Magnetköpfe von Hause aus so ausgelegt, daß sie einen äußerst schmalen Luftspalt aufweisen, so daß auch hochauflösende Längenmessungen im Rahmen der vorliegenden Erfindung möglich sind.

Bei einem bevorzugten Ausführungsbeispiel der Erfindung ist der Tonband-Magnetkopf ein Löschkopf.

Diese Maßnahme hat den Vorteil, daß ein handelsübliches Element verwendet werden kann, das von Hause aus über ein besonders stark ausgebildetes Streufeld verfügt, so daß ein besonders intensiver Meßeffekt entsteht, auch wenn die Luftspaltbreite bei Löschköpfen etwas größer ist als bei Tonköpfen, so daß mit einem Löschkopf nicht in dem selben Maß hochauflösende Messungen möglich sind, wie bei einem Tonkopf. Allerdings reicht die bei Löschköpfen übliche Luftspaltbreite von unter einem halben Millimeter für vielerlei Aufgaben aus, insbesondere für die im Rahmen der vorliegenden Erfindung wichtige Anwendung, bei der die Meßkluppe zum Vermessen von Baumstämmen oder auch zum Vermessen von Schlachtvieh, beispielsweise von Schweinehälften, dient.

Bei einer weiteren bevorzugten Ausgestaltung der Erfindung sind die magnetischen Längsmarkierungen als Sprossen bzw. Zwischenräume eines leiterförmigen Gebildes ausgebildet, die durch das Streufeld laufen.

Diese Maßnahme hat den Vorteil, daß die Längsmarkierungen in einem Stück leicht hergestellt werden können, und daß eine hohe Genauigkeit des Rastermaßes der Längsmarkierungen gewährleistet werden kann, weil alle Längsmarkierungen (Sprossen/Zwischenräume) durch längs verlaufende Holmen mechanisch zusammengehalten werden.

Bei einem weiteren bevorzugten Ausführungsbeispiel der Erfindung ist der Tonband-Magnetkopf ein resonanzfrequenzbestimmendes Bauteil eines Oszillators.

Diese Maßnahme hat den Vorteil, daß der Meßeffekt, nämlich die durch das Streufeld laufenden Längsmarkierungen, in einfacher Weise als Amplitudenvariation des Oszillatorsignals erfaßt werden kann, weil beim Durchlaufen der Längsmarkierungen der Oszillator außer Resonanz gerät und sich dies in einer starken Amplitudenvariation manifestiert. Auch ist ein höherfrequentes Signal von beispielsweise 10 bis 20 kHz, wie es bei einem derartigen Oszillator vorzugsweise eingesetzt werden kann, gegenüber Drifterscheinungen wesentlich weniger empfindlich als ein Gleichspannungssignal, wie es bei Feldplattenanordnungen des Standes der Technik erhalten wird. Auch die Signalverarbeitung (Verstärkung und dgl.) kann bei einem höherfrequenten Signal präziser vollzogen werden.

Schließlich ist noch eine Ausführungsform der Erfindung bevorzugt, bei der jeweils zwei Tonband-Magnetköpfe nebeneinander in Differentialanordnung betrieben werden, bei der ein erster und ein zweiter Tonband-Magnetkopf einem Meßsignal der magnetischen Längsmarkierungen, ein dritter und ein vierter Tonband-Magnetkopf jedoch keinem Meßsignal ausgesetzt werden, und die Signale der Tonband-Magnetköpfe miteinander verglichen werden, um Umwelteinflüsse zu eliminieren.

Dieser Ausführungsform liegt die Aufgabe zugrunde, eine Meßkluppe der eingangs genannten Art dahingehend weiterzubilden, daß ein gegenüber Umwelteinflüssen, insbesondere gegenüber Temperaturänderungen umempfindliches Meßsystem zur Verfügung steht.

Die obige Maßnahme hat den Vorteil, daß eine Kompensation von Umwelteinflüssen, insbesondere der Temperatur, erreicht wird, weil die jeweils zwei nebeneinander angeordneten Magnetköpfe gleichermaßen denselben Umweltbedingungen ausgesetzt sind.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1 eine schematische Draufsicht, teilweise aufgebrochen und abgebrochen, eines Ausführungsbeispiels einer erfindungsgemäßen Meßkluppe;

Fig. 2 einen elektrischen Stromlaufplan zur Erläuterung von erfindungsgemäß verwendeten Längensensoren;

Fig. 3 einen Ausschnitt, in vergrößertem Maßstab, aus der Darstellung gemäß Fig. 1 zur Erläuterung eines Ausführungsbeispiels von erfindungsgemäß verwendeten Längsmarkierungen.

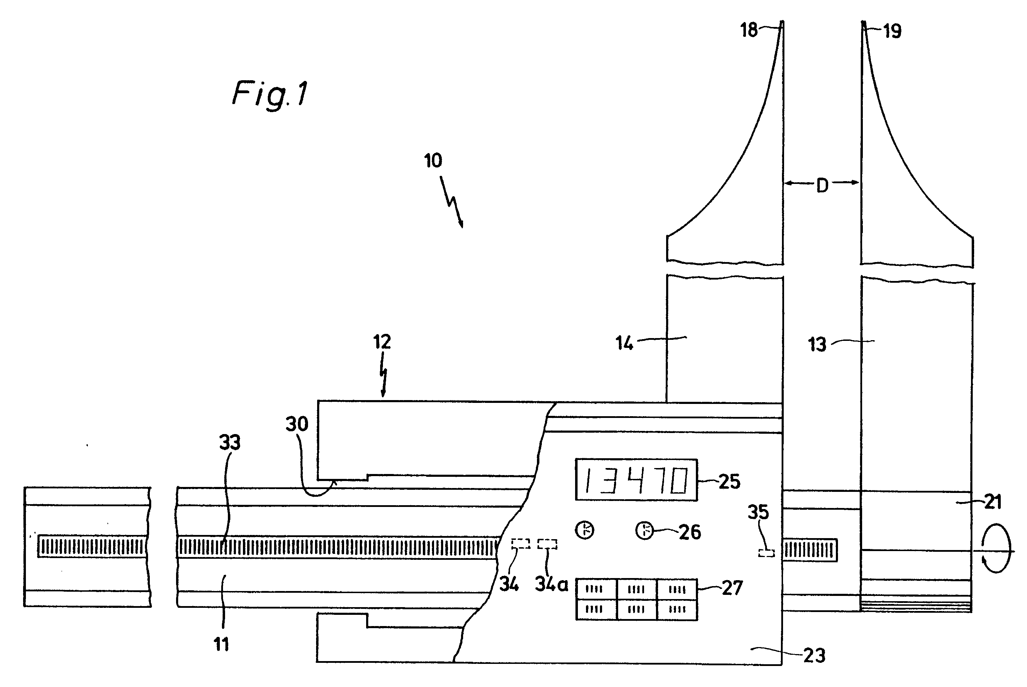

In Fig. 1 bezeichnet 10 insgesamt eine Meßkluppe, d.h. ein schiebleprenähnliches Meßinstrument zur Messung der Außenabmessung verhältnismäßig großer Meßobjekte, beispielsweise des Durchmessers von Baumstämmen, der Abmessungen von Schlachtvieh u. dgl.

Eine detailliertere Beschreibung dieser Art von Meßkluppen findet sich in der älteren Patentanmeldung DE-A-3 644 444 derselben Anmelderin.

Bei der Meßkluppe 10 ist auf einem im Querschnitt doppelprismatisch ausgebildeten Stab 11 ein Läufer 23 längsbeweglich angeordnet. Der Stab 11 ist an seinem einen Ende mit einem rechtwinklig abstehenden ersten Meßschnabel 13 versehen, dem in paralleler Ausrichtung ein zweiter Meßschnabel 14 am rechten Ende des Läufers 12 (in der Darstellung von Fig. 1) gegenübersteht.

Die Meßschnäbel 13, 14 laufen an ihren freien Enden bevorzugt in Spitzen 18, 19 aus, damit z.B. beim Anlegen an Schlachtvieh oder Schweinehälften, möglicherweise auch durch gereingfügiges Einstechen, eine exakte Bestimmung von Fleisch- oder Muskelprozenten, von Handelsklassen u. dgl. möglich wird. Weiterhin ist bevorzugt einer der Meßschnäbel um die Längsachse des Stabes 11 drehbar ausgebildet, beim Ausführungsbeispiel der Fig. 1 ist dies der rechte Meßschnabel 13 am Stab 11, der mittels eines Drehgelenks 21 um die Längsachse des Stabes 11 drehbar ist, wie in Fig. 1 mit einem Pfeil angedeutet. Auf diese Weise können Abstandsmessungen auch zwischen zwei Punkten vorgenommen werden, die nicht in einer Ebene liegen, wobei die Abstandsmessung die Projektion der Meßpunkte in die Ebene des Stabes 11 darstellt.

Am Läufer 12 ist ein Kleinrechner 23 angeordnet. Der Kleinrechner 23 ist auf seiner vorzugsweise pultförmig ansteigenden Oberfläche mit zahlreichen Anzeige- und Betätigungselementen versehen. Eine Ziffernanzeige 25 kann beispielsweise den momentanen Abstand D zwischen den Meßkanten der Meßschnäbel 13, 14 anzeigen. Kontrollelemente 26 können z.B. die Betriebsbereitschaft oder die jeweilige anzahl der bereits getätigten Messungen anzeigen. Mit einer Tastatur 27 können z.B. Meßparameter, beispielsweise Codezahlen für bestimmte Arten von Meßobjekten (im Falle des Ausmessens von Baumstämmen beispielsweise die Baumart oder der Fuderpreis oder der Standort, oder im Falle des Ausmessens von Schlachtvieh oder Fleischstücken die Tierart u. dgl.) eingegeben werden.

Um den Läufer 12 auf dem Stab 11 mechanisch präzise, gleichzeitig aber auch leichtgängig und verkantungsfrei zu führen, ist eine formschlüssige Führung 30 nur an den seitlichen Rändern des Läufers 12, in Längsrichtung gesehen, vorgesehen.

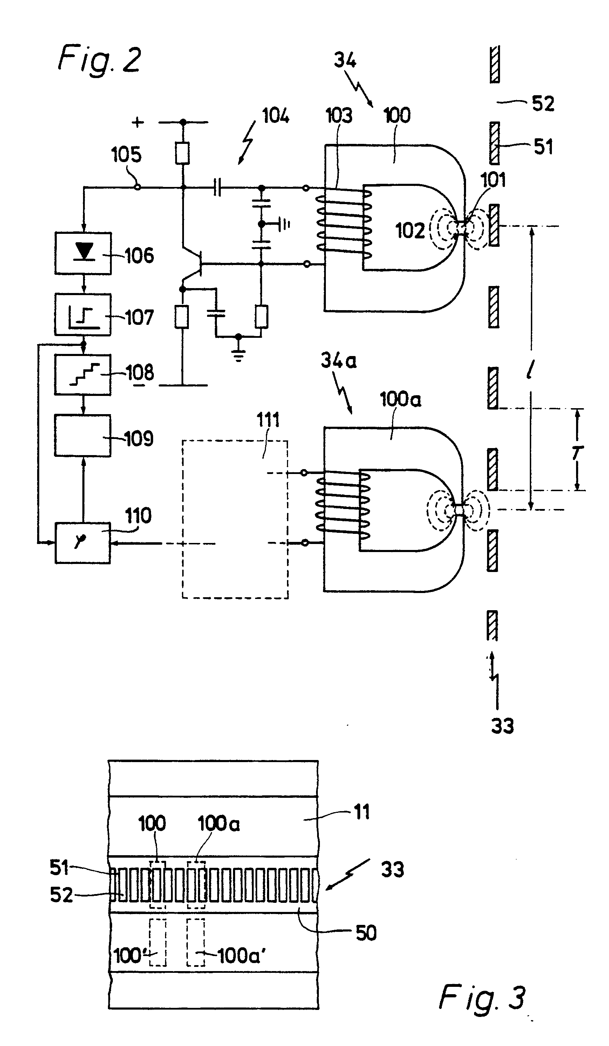

In Fig. 1 erkennt man ferner eine auf die Breitseite des Stabes 11 aufgebrachte magnetische Längsmarkierung 33, deren Einzelheiten noch näher in der vergrößerten Darstellung der Fig. 3 zu erkennen sind. Auf dem Läufer 12 sind oberhalb der Längsmarkierung 33 Längensensoren 34, 34a angeordnet, und am rechten Rand des Läufers 12 ist noch ein Positionssensor 35 zu erkennen.

Selbstverständlich ist es im Rahmen der vorliegenden Erfindung auch möglich, die Längsmarkierung am Läufer 12 und Sensoren am Stab 11 anzuordnen, wobei dann der Kleinrechner mit Elementen des Stabes 11 verbunden werden kann oder das Sensorsignal wieder auf den Läufer 12 zurückgeführt werden kann, je nachdem, wie dies im Einzelfall vorteilhaft sein sollte.

Wie Fig. 3 im einzelnen zeigt, ist bei einem Ausführungsbeispiel einer magnetischen Längsmarkierung 33 diese als leiterförmiges Gebilde ausgestaltet, bei dem zwischen zwei Holmen 50 Sprossen 51 sich mit Zwischenräumen 52 abwechseln. Bei einem praktischen Ausführungsbeispiel kann hierzu ein ca. 12 mm breites und 0,5 mm dickes Metallband verwendet werden, das mit hoher Präzision so gestanzt werden kann, daß der Abstand von Sprosse 51 zu Sprosse 51 etwa 2 mm mit hoher Reproduzierbarkeit beträgt. Die Breite der Sprossen 51 kann z.B. 30 % der Teilung betragen. Die Breite der Holmen 50 kann mit ca. 2 mm bemessen werden.

Fig. 2 zeigt ein Ausführungsbeispiel von erfindungsgemäß verwendeten Längensensoren 34, 34a, wobei dieselbe Bauweise auch für den Positionssensor 25 verwendet werden kann, der lediglich dazu vorgesehen ist, eine definierte Endstellung, beispielsweise bei geschlossenen Meßschnäbeln 13, 14 (D = 0) zu erkennen, um auf diese Weise eine Eichung des Meßsystems zu ermöglichen. Dies sollte jedoch im folgenden nur anhand des Beispiels der Längensensoren 34, 34a erläutert werden.

In Fig. 2 erkennt man, daß die Längensensoren 34, 34a als handelsübliche Tonband-Magnetköpfe 100, 100a, insbesondere als Löschköpfe ausgebildet sind. Magnetköpfe 100 dieser Art verfügen über einen präzise gefertigten Luftspalt 101, dessen Breite im Falle eines Tonkopfes nur einige μ beträgt, während die Breite bei einem Löschkopf etwa einen halben Millimeter ausmachen kann. Im Luftspalt 101 herrscht ein Magnetfeld, das seitlich aus dem Luftspalt 101 als Streufeld 102 austritt. Wegen der sehr viel größeren Luftspaltbreite im Falle eines Löschkopfs ist das Streufeld 102 bei einem Löschkopf naturgemäß wesentlich stärker ausgebildet und kann noch in merkbarem seitlichem Abstand vom Luftspalt 191 detektiert werden.

Um einen Schenkel eines Jochs des Magnetkopfs 100 ist eine Spule 103 gewickelt. Die Spule 103 bzw. die Induktivität des Magnetkopfs 100 ist bestimmend für die Resonanzfrequenz eines gesamthaft mit 104 bezeichneten Oszillators, der beim Ausführungsbeispiel der Fig. 2 äußerst schematisch als Colpitts-Oszillator in Emitterschaltung angedeutet ist.

Ein Ausgangssignal des Oszillators 104 mit einer Frequenz von z.B. 10 bis 20 kHz ist an einem Ausgang 105 abnehmbar. Vom Ausgang 105 wird das Signal über einen Gleichrichter 106 und eine Schwellwertstufe 107 auf einen Zähler 108 geführt, von dem es dann auf eine Auswertelektronik 109 gelangt. Vom Ausgang der Schwellwertstufe 107 (alternativ: vom Ausgang des Gleichrichters 106) führt ein weiterer Signalzweig zu einem Phasendetektor 110, der andererseits mit einer gesamthaft mit 111 bezeichneten Elektronik versorgt wird. Die Elektronik 111 steht stellvertretend für die entsprechenden Elemente 104 bis 107, die zum zweiten Magnetkopf 100a gehören und lediglich der Übersichtlichkeit halber in Fig. 2 nicht nochmals im einzelnen dargestellt sind.

Die Wirkungsweise der Anordnung gemäß Fig. 2 ist wie folgt:

Die Magnetköpfe 100, 100a befinden sich im axialen Abstand 1 nebeneinander, wobei die magnetische Längsmarkierung 33 in Form des leiterförmigen Gebildes 50 bis 52 seitlich an den Luftspalten 101 derart vorbeigeführt wird, daß nacheinander die Sprossen 51 und die Zwischenräume 52 durch die Streufelder 102 laufen. Der axiale Abstand 1 der Luftspalte 102 der Magnetköpfe 100, 100a voneinander beträgt ein ungeradzahliges Vielfaches des halben Rastermaßes T der Längsmarkierungen 33.

Werden nun die Längsmarkierungen 33 relativ zu den Magnetköpfen 100, 100a bewegt, so gelangen nacheinander jeweils Sprossen 51 und Zwischenräume 52 in den Bereich des Streufeldes 102 der Magnetköpfe 100, 100a. Die Oszillatoren 104 gelangen damit zyklisch außer Resonanz und wieder in Resonanz, so daß das Ausgangssignal am Ausgang 105 amplitudenmoduliert wird. Nach Durchlaufen des Gleichrichters 106 und der Schwellwertstufe 107 steht somit ein Impulssignal zur Verfügung, das für die vorbeilaufenden Sprossen 51 bzw. Zwischenräume 52 repräsentativ ist. Durch Aufsummieren der Signale im Zähler 108 kann somit ein Maß für den Verschiebeweg des Läufers 12 relativ zum Stab 11 gewonnen werden.

Um weiterhin eine Aussage über die Verschieberichtung zu erhalten, ist in an sich bekannter Weise ein Vergleich der Signale der beiden Magnetköpfe 100, 100a im Phasendetektor 110 vorgesehen.

Wie man schließlich noch aus Fig. 3 erkennen kann, kann ferner eine Differentialanordnung derart eingesetzt werden, daß neben den Magnetköpfen 100, 100a radial versetzte weitere Magnetköpfe 100' bzw. 100a' angeordnet werden, die vorzugsweise keinem Meßsignal ausgesetzt sind. Durch Vergleich der Signale der Magnetköpfe 100/100' bzw. 100a/100a' können nun Umwelteinflüsse, beispielsweise Temperaturkoeffizienten u. dgl. eliminiert werden, wie dies an sich bekannt ist.

## Patentansprüche

1. Meßkluppe mit einem Stab (11) und einem auf dem Stab (11) mittels formschlüssiger Führung (30) längsverschiebbaren Läufer (12), wobei der Stab (11) und der Läufer (12) mit je einem rechtwinkelig zu einer Längsachse des Stabes (11) abstehenden Meßschnabel (13, 14) in zueinander paralleler Anordnung versehen sind und zwischen dem Stab (11) und dem Läufer (12) magnetische Längsmarkierungen (33) in Wechselwirkung mit mindestens einem Längensensor (34) stehen, dadurch gekennzeichnet, daß der Längensensor (34) als Tonband-Magnetkopf (100) mit einem Luftspalt (101) ausgebildet ist, aus dem ein Streufeld (102) austritt, und daß der Tonband-Magnetknopf (100) so positioniert ist, daß beim Verschieben des Läufers (12) auf dem Stab (11) die magnetischen Längsmarkierungen (33) durch das Streufeld (102) laufen.

2. Meßkluppe nach Anspruch 1, dadurch gekennzeichnet, daß der Tonband-Magnetkopf (100) ein Löschkopf ist.

3. Meßkluppe nach Anspruch 1 oder 2, dadurch gekennzeichnet, daS die magnetischen Längsmarkierungen (33) als Sprossen (51) bzw. Zwischenräume (52) eines leiterförmigen Gebildes (50 bis 52) ausgebildet sind, die durch das Streufeld (102) laufen.

4. Meßkluppe nach einem der Ansprüche 1 bis 3, dadurch gekennzeichnet, daß der Tonband-Magnetkopf (100) ein resonanzfrequenzbestimmendes Bauteil eines Oszillators (104) ist.

5. Meßkluppe nach einem der Ansprüche 1 bis 4, dadurch gekennzeichnet, daß jeweils zwei Tonband-Magnetköpfe (100, 100a, 100', 100a') nebeneinander in Differentialanordnung betreibbar sind, bei der ein erster und ein zweiter Tonband-Magnetkopf (100, 100a) so angeordnet sind, daß sie einem Meßsignal der magnetischen Längsmarkierungen (33) ausgesetzt werden, ein dritter und ein vierter Tonband-Magnetkopf (100', 100a') jedoch so angeordnet sind, daß sie keinem Meßsignal ausgesetzt werden, und die Signale der Tonband-Magnetköpf (100, 100a, 100', 100a') miteinander verglichen werden, um Umwelteinflüsse zu eliminieren.

## Claims

1. A slide caliper, comprising a rule (11) and a slide (12) being longitudinally displaceable on the rule (11) by means of a form-locking guide (30), the rule (11) and the slide (12) being each provided with a measuring leg (13, 14) extending at a right angle to a longitudinal axis of the rule (11) and in parallel relationship to each other, a longitudinal magnetic marking (33) and at least one longitudinal sensor (34) cooperating with each other between the rule (11) and the slide (12), characterized in that the longitudinal sensor (34) is designed as a tape recorder magnetic head (100) having an air gap (101) with a stray field (102) exiting therefrom, and that the tape recorder magnetic head (100) is situated such that the longitudinal magnetic marking (33) runs through the stray field (102) when the slide (12) is displaced on the rule (11).

2. The caliper of claim 1, characterized in that the tape recorder magnetic head (100) is an erase head.

3. The caliper of claim 1 or 2, characterized in that the longitudinal magnetic markings (33) are designed as rungs (51) and interstices (52), respectively, of a ladder-shaped element (50 through 52), running through the stray field (102).

4. The caliper of any of claims 1 through 3, characterized in that the tape recorder magnetic head (100) is an element of an oscillator (104), determining the resonance frequency thereof.

5. The caliper of any of claims 1 through 3, characterized in that two tape recorder magnetic head (100, 100a, 100', 100a') are operable side-by-side in a differential arrangement, with a first and a second tape recorder magnetic head (100, 100a) being arranged such that they are exposed to a measuring signal of the magnetic longitudinal markings (33), whereas a third and a fourth tape recorder magnetic head (100', 100a') are not exposed to a measuring signal, and that the signals from the tape recorder magnetic heads (100, 100a, 100', 100a') are compared with each other for eliminating spurious influences.

## Revendications

1. Pied à coulisse avec une tige (11) et un coulisseau (12) déplaçable longitudinalement sur la tige (11) à l'aide d'un guide à engagement positif (30), la tige (11) et le coulisseau (12) étant équipés chacun d'un bec de mesure (13, 14) dépassant de la tige (11) perpendiculairement à l'axe longitudinal de celle-ci, les deux becs étant parallèles l'un à l'autre , et des repérages longitudinaux (33) magnétiques étant disposés avec action réciproque avec au moins un capteur longitudinal (34) entre la tige (11) et le coulisseau (12), caractérisé en ce que le capteur longitudinal (34) est conformé en tête magnétique de bande magnétique (100) avec entrefer (101) dont se dégage un champ de dispersion (102), et en ce que la tête magnétique (100) est positionnée de telle sorte que, lorsque l'on déplace le coulisseau (12) sur la tige (11), les repérages longitudinaux magnétiques (33) parcourent le champ de dispersion.

2. Pied à coulisse selon la revendication 1, caractérisé en ce que la tête magnétique de bande magnétique (100) est une tête d'effacement.

3. Pied à coulisse selon la revendication 1 ou 2, caractérisé en ce que les repérages longitudinaux magnétiques (33) sont conformés en lignes (51) et en interstices (52) formant un ensemble en forme d'échelle (50 à 52), qui parcourent le champ de dispersion.

4. Pied à coulisse selon l'une quelconque des revendications 1 à 3, caractérisé en ce que la tête magnétique (100) est un composant analysant les fréquences de résonnance d'un oscillateur (104).

5. Pied à coulisse selon l'une quelconque des revendications 1 à 4, caractérisé en ce que respectivement deux têtes magnétiques (100, 100a, 100', 100a') sont exploitables l'une à côté de l'autre selon une disposition différentielle, selon laquelle une première et une deuxième tête magnétique (100, 100a) sont disposées de telle sorte qu'elles sont soumises à un signal de mesure des repérages longitudinaux magnétiques (33), une troisième et une quatrième têtes magnétiques (100', 100a') sont disposées de telle sorte qu'elles ne sont cependant pas soumises à un signal de mesure, et les signaux des têtes magnétiques (100, 100a, 100', 100a') sont comparés les uns aux autres afin d'éliminer toute influence de l'environnement.

*Fig.1*

Fig. 2

Fig. 3